# EUROPEAN PATENT SPECIFICATION

(11) **EP 1 716 940 B1**
(45) Date of publication and mention of the grant of the patent: **07.01.2009**
(21) Application number: 06252232.1
(22) Date of filing: 26.04.2006
(51) Int. Cl.: B21K 1/30, F16H 55/17, F16D 23/02

(54) **Method of preparing a gear structure**
Verfahren zur Herstellung eines Zahnrades
Méthode de fabrication d'un pignon

(30) Priority: 28.04.2005 JP 2005132780
(43) Date of publication of application: 02.11.2006
(73) Proprietor: Createch Co. Ltd.,, Iwata-shi, Shizuoka-ken (JP); Kanematsu Corporation, Kobe-shi Hyogo (JP)
(72) Inventor: Ishida, Hitoshi, c/o Createch Co., Ltd., Iwata-shi, Shizuoka-ken (JP); Atsumi, Kotaro, c/o Createch Co., Ltd., Iwata-shi, Shizuoka-ken (JP)
(74) Representative: Waldren, Robin Michael

(56) References cited:
- EP-A- 0 949 435
- EP-A- 1 382 874
- FR-A- 2 811 731
- FR-A- 2 813 029
- US-A- 3 678 557
- PATENT ABSTRACTS OF JAPAN vol. 2003, no. 12, 5 December 2003 (2003-12-05) -& JP 2005 007468 A (CLEARTEC:KK), 13 January 2005 (2005-01-13)
- PATENT ABSTRACTS OF JAPAN vol. 008, no. 012 (M-269), 19 January 1984 (1984-01-19) -& JP 58 176046 A (NISSAN JIDOSHA KK), 15 October 1983 (1983-10-15)

## Description

This invention relates to a method of preparing a gear structure.

Forging of an annular workpiece to shape gear teeth whereby an inside member is fitted in a gear member to engage an annular inner peripheral wall thereof and welding the two to form a unitary body is disclosed in US-A-3 678 557 , which forms the basis for the preamble of claim 1. Japanese Unexamined Patent Publication No. JP-A-2005-7468 also discloses a device for finish forging a gear. With this device, a ring-shaped workpiece with roughly formed teeth is placed adjacent to a die having gear-forming teeth on its inner periphery and is displaced downward into the die and pressurized by a punch to finish the rough teeth with the die.

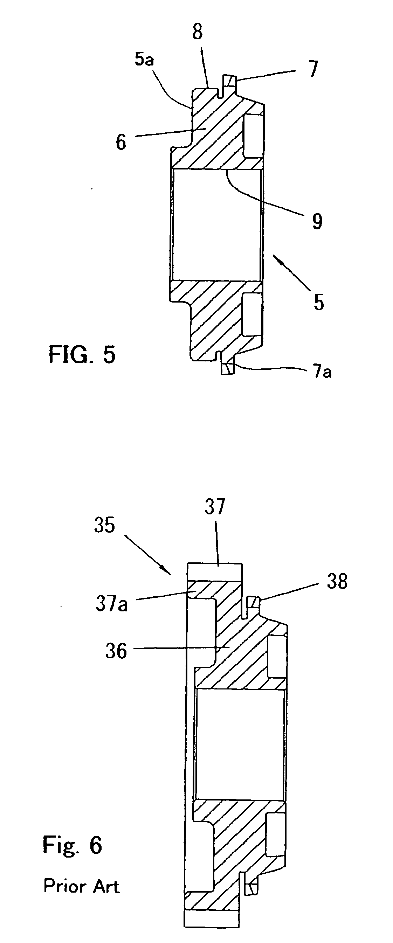

With the above conventional forging device, a ring-shaped gear with a uniform thickness can be formed with high accuracy. However, in the case of a gear as shown in FIG. 6, that is, a gear 35 with clutch teeth 38 on one side of its bass part 36, gear teeth 37 cannot be formed with high accuracy by forging, since the thickness of the rim part 37a is not uniform and since the flow of the material of the rim part 37a and the pressure acted in the material thereof during the forging are not uniform. Therefore, such gear teeth 37 have been unavoidably shaped by machining, typically by gear shaping, as shown in United States Patent No. 3,720,989. The machining, however, requires a long processing time and causes poor productivity. In addition, since the surface of the teeth become coarse, the durability of the gear is lowered. Therefore, it is generally necessary to perform an additional step for grinding the gear teeth to be finished. Furthermore, since swarf is generated during machining, the material yield is low and disposal of the swarf causes a lot of troubles.

The present invention has been made in view of the above problems.

In accordance with the present invention there is provided a method of preparing a gear structure comprising the steps of:
(a) forging an annular workpiece having an inner peripheral wall and an outer peripheral wall to shape gear teeth on said outer peripheral wall to obtain an annular gear,
(b) fitting an inside member having a circular outer peripheral surface in said annular gear such that said outer peripheral surface of said inside member engages said inner peripheral wall of said annular gear; and
(c) integrating said inside member and annular gear into a unitary body
wherein said forging step (a) comprises placing said annular workpiece in a die in coaxial therewith, said die having a die cavity corresponding in shape to the shape of said gear teeth, and then pressurizing said annular workpiece axially in opposing directions generally simultaneously so that the gear teeth are shaped in said die cavity.

The gear structure is composed of two separated sections which are integrated into a unitary body. Namely, the gear structure includes an annular gear formed by forging, and an inside member fitted into and integrated with the annular gear. Therefore, even when the inside member has a complex shape, the annular gear can be formed from a workpiece having a simple annular shaped with high accuracy by forging. Also, since the teeth of the gear structure are formed by forging, the gear can be produced quickly with high productivity even when the inside member has a complex shape.

In addition, since the annular gear is formed from an annular workpiece having a uniform thickness by forging, the flow of the material and the pressure in the material constituting the workpiece can be stable during the forging. Therefore, the annular gear has high accuracy, high precision and high durability.

The present invention will be described in detail below with reference to the accompanying drawings, in which:
FIG. 1 is a cross-sectional view diagrammatically illustrating one embodiment of a gear structure prepared in accordance with the present invention;
FIG. 2 is a cross-sectional view diagrammatically illustrating a forging device suitably used for forming an annular gear of the gear structure prepared in accordance with the present invention, in which the left hand half shows a state of the forging device before forging and the right hand half shows a state just after completion of the forging;
FIG. 3 is a cross-sectional view of one embodiment of an annular gear produced by forging;
FIG. 4 is a cross-sectional view of another embodiment of an annular gear which is used in the gear structure of FIG. 1 and which is produced by forging and thereafter machined to form a stepped portion in the inner peripheral wall thereof;
FIG. 5 is a cross-sectional view of an inside member of the gear structure of FIG. 1; and
FIG. 6 is a cross-sectional view of a conventional gear having gear teeth formed by machining.

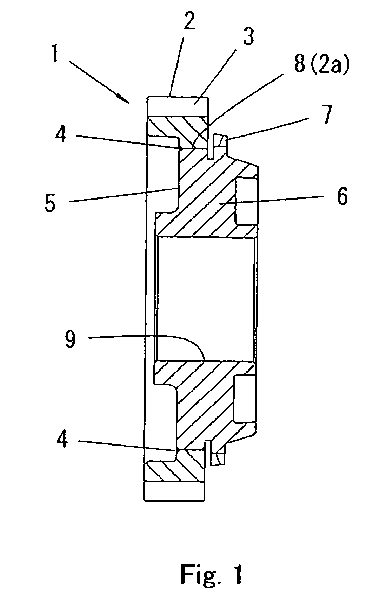

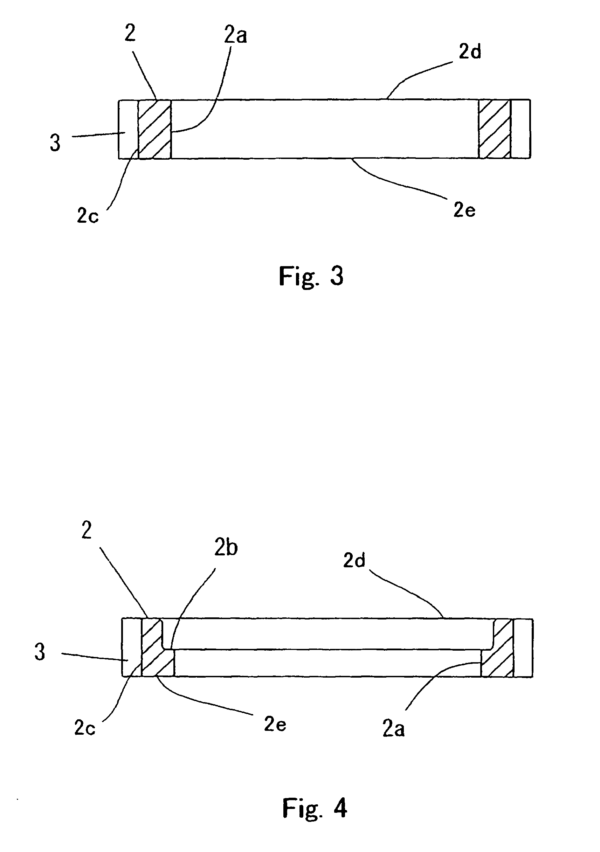

Referring now to FIGS. 1, 4 and 5, designated generally as 1 is a gear structure prepared in accordance with the present invention. The gear structure 1 has an annular gear 2 produced by forging and an inside member 5 fitted in and integrally joined with the annular gear 2. The annular gear 2 has an outer peripheral wall 2c and a coaxial inner peripheral wall 2a (FIG. 4). The outer peripheral wall 2c has gear teeth 3 prepared by forging. The inside member 5 has a circular outer peripheral surface 8 (FIG. 5). As shown in FIG. 1, the inside member 5 is fitted in the annular gear 2 such that the circular outer peripheral surface 8 of the inside member 5 engages the inner peripheral wall 2a of the annular gear 2. The inside member 5 is integrated with the annular gear 2 by any suitable means such as by welding 4.

The annular gear 2 shown in FIGS. 1 and 4 has a pair of parallel, opposing top annular surface 2d and bottom annular surface 2e extending between the inner and outer peripheral walls 2a and 2c. The top annular surface 2d has a stepped portion 2b which is in flush with an annular surface 5a of the inside member 5 when the inside member 5 is fitted in the annular gear 2.

The inside member 5 has a main body 6 formed preferably by forging and an additional circular outer peripheral wall 7a provided with clutch teeth 7. The clutch teeth 7 are formed with a gear shaping machine. The circular peripheral wall 8 of the inside member 5 may be finished (cut) with a lathe. The inside member 5 has a shaft bore 9 also finished (cut) with a lathe and coaxial with the circular peripheral walls 8 and 7a.

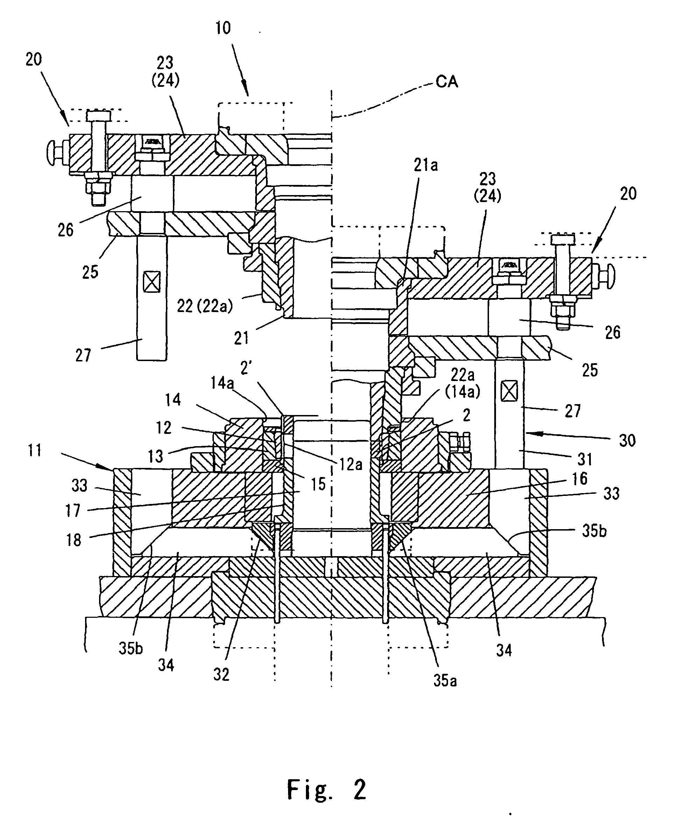

The annular gear 2 is produced from an annular (ring-shaped) workpiece 2' by forging. The forging may be cold forging or warm forging. Cold forging is preferred. When the workpiece 2' does not have previously roughly shaped teeth, the forging operation may be suitably repeated twice or more times. On the other hand, when the workpiece 2' has previously roughly shaped teeth, the forging operation generally gives the annular gear 2 having finished gear teeth. FIG. 3 depicts a workpiece 2' which is as obtained by forging and in which component parts similar to those in FIG. 4 are designated by the same reference numerals. The annular gear shown in FIG. 3 which has not yet been machined may be used as such for the fabrication of the gear structure of the present invention. Preferably, however, a top annular surface 2d of the annular gear shown in FIG. 3 is machined to form a stepped portion 2b to obtain the annular gear shown in FIG. 4. The forging may be suitably carried out using a forging device 10 shown in FIG. 2.

The forging device 10 has as main components a die unit 11 mounted on a base (not shown), a punch unit 20 located above the die unit 11 and moveable up and down by a ram (not shown), and a pressure transmitting device 30.

The die unit 11 has a die 12 for shaping the workpiece 2'. The die 12 has a reversed trapezoidal cone shape. Thus, the die 12 has an inside periphery provided with gear forming teeth 12a and an outside periphery tapered downward so that the diameter thereof gradually decreases downward. The die 12 is fitted in a die holder 13.

The die holder 13 is press-fitted in a vertical intermediate portion of a cylindrical clamp 14. A stop ring (reference number is not given) and a receiving ring 15 are fitted above and below, respectively, the die holder 13 in the clamp 14. The clamp 14 has a tapered upper inner periphery the diameter of which gradually increases upward to form a female guide 14a. The clamp 14 and the receiving ring 15 are supported on the base via a holder 16. A core rod 17 vertically extends coaxially along the center axis CA of the holder 16. A cylindrical counter punch, that is, a second punch 18, is vertically slidably provided around the core rod 17 and guided thereby. The core rod 17 has an extended portion protruding from the die 12 into which the workpiece 2' is inserted. An upper part of the second punch 18 extends into the receiving ring 15 so that it can receive the workpiece 2' fitted in the die 12.

The punch unit 20, which is driven up and down by operation of the ram, is located above the die unit 11. The punch unit 20 has a cylindrical first punch 21 for pressing down the workpiece 2', a die punch 22 surrounding the first punch 21 for pressing down the die 12, and a die punch holder 23 for holding the die punch 22. The die punch holder 23 has a fixing plate 24 to which a holder 21 a for supporting the first punch 21 is integrally secured. Disposed below the fixing plate 24 is a holding plate 25 to which the die punch 22 is fixed at its center and from which the die punch protrudes downward. The holding plate 25 is fixed to the fixing plate 24 by support pins 26 protruding from an intermediate peripheral portion of the fixing plate 24 and pressing bodies (pressing pins) 27 connected to the lower ends of the support pins 26. The pressing pins 27 constitute a part of the pressure transmitting device 30.

A tapered male guide 22a, which can be press-fitted into the female guide 14a of the clamp 14 described before, is formed at a lower end portion of the die punch 22. The mating parts of the female guide 14a and the male guide 22a have a taper angle which is generally the same as that of the die 12 and the die holder 13. The press-fitted rate of the male guide 22a into the female guide 14a is 1 % or lower, preferably about 0.4 %. The taper angle and the press-fitted rate are determined depending on the size and material of the workpiece 2'. Further, the timing at which the male guide 22a is press-inserted into the female guide 14a is before the first punch 21 is pressurized to the workpiece 2'.

The pressure transmitting device 30 is provided between the fixing plate 24 and the holder 16. The pin-shaped pressing bodies 27 are arranged parallel to the first punch 21 with their upper ends integrally connected to the fixing plate 24 via the support pins 26. The pressure transmitting device 30 preferably includes a pair of pushing bodies 32, a pair of pressure receiving bodies 33 and a pair of transmitting bodies 34 fitted in the holder 16 on the base. The respective pairs of the bodies 32, 33, 34 are angularly spaced apart 180 degrees from each other. Each pushing body 32 is disposed right below the second punch 18 for vertical movement. Each pressure receiving body 33 is disposed below the corresponding pressing body 27 for vertical movement. Each transmitting body 34 is preferably a rectangular parallelepiped solid body and is disposed for horizontal movement. Each transmitting body 34 has one end formed into a 45-degree angle cam 35a for engagement with a tapered lower end of the corresponding pressing body 32 and the other end formed into a 45-degree angle cam 35b for engagement with a tapered lower end of the corresponding pressure receiving body 33. The timing at which the first punch 21 has completed the positioning of the workpiece 2' in the die 12 is rendered nearly the same as the timing at which the pressing bodies 27 are brought into contact with an upper surface of the pressure receiving bodies 33.

The above-described forging device operates as follows. First, the forging device 10 is in the state shown in the left half part of FIG. 1. Upon driving of the ram, the holder 23 moves downward to move the first punch 21 toward the workpiece 2'. Simultaneously, the holder 23 pressurizes the respective pressing bodies 27 of the pressure transmitting device 30. The pressurization force of the holder 23 is transmitted to the pushing bodies 32 though the pressure receiving bodies 33 and the pressure transmitting bodies 34. The first and second punches 21, 18 reach the workpiece 2' generally simultaneously.

On the other hand, when the holder 23 moves downward, it also pressurizes the holding plate 25 so that the die punch 22 is displaced downward toward the workpiece 2'. As discussed above, the time at which the holding plate 25 starts press-fitting the die punch 22 into the clamp assembly 14 is earlier than the time at which the first and second punches 21, 18 start pressurizing the workpiece 2' from its top and bottom ends. The die 12 thus already locks the workpiece 2' before the first and second punches 21, 18 compress the workpiece 2'.

When the first and second punches 21, 18 pressurize the workpiece 2' from both the ends thereof in its axial direction generally simultaneously under the condition that the die 12 locks the work 2', the work 2' is plastically deformed. That is, the top and bottom portions of the workpiece 2' flow toward the center thereof in the axial direction. The workpiece 2' is firmly pressed to the inner teeth 12a of the die 12 and the configuration of the inner teeth 12a is transferred to the workpiece 2'.

According to the forging device 10 in the embodiment, the equal pressurization force can be given to the top and bottom ends of the workpiece 2' generally simultaneously. The configuration of the teeth of the die 12 thus can be accurately transferred to the workpiece 2'.

Because the die punch 22 is press-fitted into the clamp 14 along the tapering inner and outer surfaces 14a, 22a in the above embodiment, the axis of the first punch 21 is kept to be consistent with the center axis CA, and also the first punch 21 and the die 12 can be kept coaxially. In other words, the first punch 21 does not incline relative to the center axis CA and to the die 12. The workpiece 2', which may be originally a cylindrical material, thus can be shaped into a gear having a high concentricity.

Also, by previously giving a compressive strain to the die punch 22 against an internal pressure generated in the die punch 22 under the forging process, the breakage of the die punch 22 caused by the internal pressure can be avoided.

One edge of the inner peripheral wall 2a of the annular gear thus produced by the forging device 10 may be machined to form a stepped portion 2b as shown in FIG 4 as described previously. The formation of such a stepped portion can reduce the weight of the gear structure and can prevent an interference with another member disposed inside the annular gear. The resulting annular die 2 is assembled with the inside member 5 to obtain the gear structure 1 with clutch teeth as shown in FIG. 1. The annular gear 2 and the inside member 5 may be suitably joined by welding or shrink fitting. Alternatively, splines or serrations may be formed on the inner peripheral wall 2a of the annular gear 2 and the first circular peripheral wall 8 of the inside member 5 so that the annular gear 2 and the inside member 5 can be integrally joined by press-fitting.

## Claims

1. A method of preparing a gear structure comprising the steps of:
(a) forging an annular workpiece (2') having an inner peripheral wall (2a) and an outer peripheral wall (2c) to shape gear teeth (3) on said outer peripheral wall (2c) to obtain an annular gear (2),
(b) fitting an inside member (5) having a circular outer peripheral surface (8) in said annular gear (2) such that said outer peripheral surface (8) of said inside member (5) engages said inner peripheral wall (2a) of said annular gear (2); and
(c) integrating said inside member (5) and annular gear (2) into a unitary body
**characterized in that** said forging step (a) comprises placing said annular workpiece (2') in a die (12) in coaxial therewith, said die (2) having a die cavity corresponding in shape to the shape of said gear teeth (3), and then pressurizing said annular workpiece (2') axially in opposing directions generally simultaneously so that the gear teeth (3) are shaped in said die cavity.

2. A method as claimed in claim 1, wherein said annular workpiece (2') is provided with roughly formed teeth on the outer peripheral wall thereof and wherein said forging step (a) forges said roughly formed teeth into well defined teeth.

3. A method as claimed in either preceding claim, further comprising, before step (b), machining said annular gear (2) to form a stepped portion (2b) in the inner peripheral wall thereof.

4. A method as claimed in any preceding claim, wherein said inside member (5) has been produced by forging, wherein said circular outer peripheral surface (8) of said inside member (5) has been thereafter machined, and wherein in step (b) said machined outer peripheral surface (8) of said inside member (5) is brought into engagement with said inner peripheral wall (2a) of said annular gear (2).

5. A method as claimed in any preceding claim, wherein step (c) is by welding.

## Patentansprüche

1. Verfahren zum Herstellen einer Zahnradstruktur, das die folgenden Schritte umfasst:
(a) Schmieden eines ringförmigen Werkstücks (2'), das eine innere Umfangswand (2a) und eine äußere Umfangswand (2c) hat, um Getriebezähne (3) auf der äußeren Umfangswand (2c) zu formen, um ein ringförmiges Zahnrad (2) zu erhalten,
(b) Anbringen eines inneren Elements (5), das eine kreisförmige Außenumfangsfläche (8) hat, in dem ringförmigen Zahnrad (2) derart, dass die Außenumfangsfläche (8) des inneren Elements (5) die innere Umfangswand (2a) des ringförmigen Zahnrades (2) in Eingriff nimmt, und
(c) Integrieren des inneren Elements (5) und des ringförmigen Zahnrades (2) in einen einheitlichen Körper,
**dadurch gekennzeichnet, dass** der Schmiedeschritt (a) umfasst, das ringförmige Werkstück (2') koaxial mit demselben in einem Gesenk (12) anzuordnen, wobei das Gesenk (12) einen Gesenkhohlraum hat, der in der Form der Form der Getriebezähne (3) entspricht, und danach das ringförmige Werkstück (2') in Axialrichtung im Allgemeinen gleichzeitig in entgegengesetzten Richtungen unter Druck zu setzen, so dass die Getriebezähne (3) in dem Gesenkhohlraum geformt werden.

2. Verfahren nach Anspruch 1, wobei das ringförmige Werkstück (2') mit grob geformten Zähnen an der äußeren Umfangswand desselben versehen ist und wobei der Schmiedeschritt (a) die grob geformten Zähne zu gut definierten Zähnen formt.

3. Verfahren nach einem der vorhergehenden Ansprüche, das ferner, vor Schritt (b), umfasst, das ringförmige Zahnrad (2) spanend zu bearbeiten, um einen abgestuften Abschnitt (2b) in der inneren Umfangswand desselben zu formen.

4. Verfahren nach einem der vorhergehenden Ansprüche, wobei das innere Element (5) durch Schmieden erzeugt worden ist, wobei die kreisförmige Außenumfangsfläche (8) des inneren Elements (5) danach spanend bearbeitet worden ist, und wobei in Schritt (b) die spanend bearbeitete Außenumfangsfläche (8) des inneren Elements (5) in Eingriff mit der inneren Umfangswand (2a) des ringförmigen Zahnrades (2) gebracht wird.

5. Verfahren nach einem der vorhergehenden Ansprüche, wobei der Schritt (c) durch Schweißen erfolgt.

## Revendications

1. Procédé de préparation d'une structure d'engrenage, comprenant les étapes suivantes:
(a) forger une pièce à usiner annulaire (2') ayant une paroi périphérique intérieure (2a) et une paroi périphérique extérieure (2c) pour former des dents d'engrenage (3) sur ladite paroi périphérique externe (2c) pour obtenir un engrenage annulaire (2),
(b) insérer un élément intérieur (5) ayant une surface périphérique extérieure circulaire (8) dans ledit engrenage annulaire (2) de sorte que la surface périphérique extérieure (8) dudit élément intérieur (5) engage ladite paroi périphérique intérieure (2a) dudit engrenage annulaire (2); et
(c) intégrer ledit élément intérieur (5) et l'engrenage annulaire (2) en un corps unitaire
**caractérisé en ce que** ladite étape de forgeage (a) comprend le placement de ladite pièce à usiner (2') dans un moule (12) coaxial à celui-ci, ledit moule (12) ayant une cavité de moule dont la forme correspond à la forme desdites dents d'engrenage (3), puis la mise sous pression de ladite pièce à usiner (2') axialement dans des directions opposées généralement simultanément de sorte que les dents d'engrenage (3) sont formées dans ladite cavité.

2. Procédé selon la revendication 1, dans lequel la pièce à usiner annulaire (2') est fournie avec des dents formées grossièrement sur sa paroi périphérique extérieure, et dans lequel l'étape du forgeage (a) forge lesdites dents formées grossièrement en des dents bien définies.

3. Procédé selon l'une quelconque des revendications précédentes, comprenant en outre, avant l'étape (b), l'usinage dudit engrenage annulaire (2) pour former une portion étagée (2b) dans sa paroi périphérique interne.

4. Procédé selon l'une quelconque des revendications précédentes, dans lequel ledit élément intérieur (5) a été produit par forgeage, dans lequel ladite surface périphérique extérieure circulaire (8) dudit membre interne (5) a été ensuite usiné, et dans lequel à l'étape (b) ladite surface périphérique externe usinée (8) dudit élément interne (5) est mis en engagement avec ladite paroi périphérique interne (2a) dudit engrenage annulaire (2).

5. Procédé selon l'une quelconque des revendications précédentes, dans lequel l'étape (c) est effectuée par soudage.
